# EUROPÄISCHE PATENTSCHRIFT

(11) **EP 2 627 915 B1**
(45) Veröffentlichungstag und Bekanntmachung des Hinweises auf die Patenterteilung: **11.06.2014**
(21) Anmeldenummer: 12720816.3
(22) Anmeldetag: 13.04.2012
(51) Int. Cl.: F16B 5/01, F16B 37/06

(54) **VERANKERUNGSEINRICHTUNG ZUM BEFESTIGEN EINES BAUTEILS AN EINEM TRÄGERELEMENT**
ANCHORING DEVICE FOR FASTENING A COMPONENT TO A CARRIER ELEMENT
DISPOSITIF D'ANCRAGE DESTINÉ À FIXER UNE PIÈCE SUR UN ÉLÉMENT DE SUPPORT

(30) Priorität: 13.04.2011 DE 102011002031
(43) Veröffentlichungstag der Anmeldung: 21.08.2013
(73) Patentinhaber: Flaig, Hartmut, 78554 Aldingen (DE)
(72) Erfinder: HOLSCHER, Winfried K.W., 78234 Engen (DE)
(74) Vertreter: Wagner, Kilian
(86) Internationale Anmeldenummer: PCT/EP2012/056825
(87) Internationale Veröffentlichungsnummer: WO 2012/140226

(56) Entgegenhaltungen:
- US-A- 5 980 174
- US-A1- 2005 005 557

## Beschreibung

Die Erfindung betrifft eine Verankerungseinrichtung zum Befestigen eines Bauteils an einem Trägerelement nach dem Oberbegriff des Anspruchs 1. Eine derartige Verankerungseinrichtung ist aus der US 5 980 174 A bekannt. Ferner betrifft die Erfindung eine Befestigungsanordnung, d.h. ein System, gemäß Anspruch 12.

Eine derartige Verankerungseinrichtung ist aus der nachveröffentlichten DE 10 2010 026 965 A1 der Anmelderin bekannt. Die bekannte Verankerungseinrichtung wird insbesondere im Bereich von als Sandwichmaterialen ausgebildeten Trägerelementen eingesetzt, welche ein vorderes und ein hinteres Metallblech aufweisen, zwischen denen eine Metallschaumschicht sandwichartig aufgenommen ist.

Die bekannte Verankerungseinrichtung besteht aus zwei hülsenförmigen Elementen, die in deren Längsrichtung über Gewinde miteinander verschraubbar sind. Die beiden Hülsen weisen jeweils Spreizzinnen auf, die mittels eines Werkzeugs aus ihrer zunächst mit der Längsrichtung der Hülsen ausgerichtete Position in eine radial aufgeweitete Position verstellbar sind. Hierbei ragen die Spreizzinnen der einen Hülse aus der Wand der einen Platte hervor, während die anderen Spreizzinnen der andren Hülse im Bereich zwischen den beiden Wänden angeordnet sind und sich an der anderen Platte abstützen. Mittels der vorbekannten Verankerungseinrichtung wird eine feste Anordnung der Einrichtung in dem Trägerelement erzielt, so dass Anbauteile sicher an dem Trägerelement befestigt werden können. Zur Anordnung bzw. Befestigung der Verankerungseinrichtung sind jedoch speziell geformte Werkzeuge erforderlich. Weiterhin kann das aus der einen Platte hervorragende Ende der Verankerungseinrichtung, je nach Anwendungsfall, entweder optisch, oder aber auch funktionell störend sein.

Aus der US 2005/005557 A1 ist eine Verankerungsvorrichtung bekannt, die ein Aufweitelement umfasst, das nicht vollständig in einem Trägerelement versenkt werden kann, so dass eine planebene Anlage eines an dem Trägerelement zu befestigenden Bauteils am Trägerelement nicht möglich ist.

Die US 5 980 174 A zeigt ein Verankerungselement, bei welchem ein Aufweitelement mittels eines Ringbundes am Trägerelement aufliegt.

Aus der US 3,579,942 ist eine Verankerungseinrichtung bekannt, umfassend eine Innengewindehülse mit am Umfang angeordneten, elastisch nach radial innen verformbaren Armen und einem Halteelement. Die bekannte Verankerungseinrichtung dient zur Anordnung in einem Trägerelement, welches zwischen zwei Deckplatten eine Wabenstruktur aufweist. Beim Einstecken der Innengewindehülse in eine Öffnung im Trägerelement werden die am Umfang angeordneten Arme am Öffnungsrand elastisch nach radial innen geformt und schnappen selbsttätig im Innern des Trägerelementes wieder nach radial außen. Sodann wird das Halteelement aufgesetzt, welches mit axialen Fortsätzen in Bereiche radial zwischen den elastischen Armen und der Innengewindehülse hineinragt, um ein selbsttätiges Lösen des Innengewindehülseelementes zu verhindern. Das Halteelement liegt mit einem Deckelabschnitt auf der Oberfläche des Trägerelementes auf und überragt dieses. Im montierten Zustand wird das Halteelement von einem Gewindebolzen axial durchsetzt, der mit dem Innengewinde der Innengewindehülse verschraubt ist. Die bekannte Verankerungseinrichtung eignet sich nicht zur Aufnahme großer Lasten. Insbesondere besteht die Gefahr eines Verbiegens der langen elastischen Arme und damit eines unbeabsichtigten Lösens der Verankerungseinrichtung. Darüber hinaus könnte sich ein mit der bekannten Verankerungseinrichtung fixiertes Bauteil nicht unmittelbar am Trägerelement abstützen.

In Kenntnis dieses Stands der Technik liegt der Erfindung die Aufgabe zugrunde, eine Verankerungseinrichtung zum Befestigen eines Bauteils an einem Trägerelement nach dem Oberbegriff des Anspruchs 1 derart weiterzubilden, dass diese ohne spezielle Werkzeuge an dem Trägerelement befestigt bzw. montiert werden kann, und dass sie bei Verwendung von sandwichartigen Trägerbauteilen die Einrichtung nicht über die Oberfläche des Trägerbauteils herausragt. Ferner besteht die Aufgabe eine entsprechend verbesserte Befestigungsanordnung (Befestigungssystem) anzugeben.

Diese Aufgabe wird mit einer Verankerungseinrichtung zum Befestigen eines Bauteils an einem Trägerelement mit den Merkmalen des Anspruchs 1 gelöst. Insbesondere ist es dabei vorgesehen, dass das radiale Aufweiten der Spreizzinnen durch ein Gewinde eines Spannelementes erfolgt. Damit wird die Möglichkeit geschaffen, beispielsweise die zur Befestigung des Bauteils an dem Trägerelement sowieso erforderliche Befestigungsschraube gleichzeitig für das radiale Aufspreizen der Spreizzinnen zu verwenden, wobei dieser Montagevorgang gleichzeitig mit der Montage des Bauteils erfolgen kann, so dass eine Vormontage der Verankerungseinrichtung, wie beim Stand der Technik erforderlich, entfallen kann. Hinsichtlich der Befestigungsanordnung wird die Aufgabe mit den Merkmalen des Anspruchs 12 gelöst.

Vorteilhafte Weiterbildungen der erfindungsgemäßen Verankerungseinrichtung zum Befestigen eines Bauteils an einem Trägerelement sind in den Unteransprüchen angeführt. In den Rahmen der Erfindung fallen sämtliche Kombinationen aus zumindest zwei von in den Ansprüchen, der Beschreibung und/oder den Figuren offenbarten Merkmalen.

Um auf besonders einfache Art und Weise ein definiertes radiales, vorzugsweise plastisches, Aufweiten der Spreizzinnen zu ermöglichen, wird es in einer besonders bevorzugten konstruktiven Ausgestaltung der Erfindung vorgeschlagen, dass das Aufweitelement einen Aufweitbereich aufweist, dass der Aufweitbereich einen größeren Durchmesser aufweist als die Spreizzinnen an der Spreizhülse im radial unaufgeweiteten Zustand auf der dem Aufweitbereich zugewandten Seite, und dass der Aufweitbereich und/oder die Spreizzinnen an den miteinander beim axialen Verspannen zusammenwirkenden Kontaktflächen in Bezug zu deren Längsachse zur Erzeugung einer radial wirkenden Spreizkraft schräg geneigt angeordnet ist/sind.

Um eine Beschädigung der Spreizzinnen durch zu weites radiales Aufweiten zu verhindern, und gleichzeitig dem Bediener durch eine Erhöhung des Drehmoments beim Einschrauben der Spannschraube zu signalisieren, dass die Verankerungseinrichtung montiert ist, wird darüber hinaus vorgeschlagen, dass die Spreizhülse eine Anschlagfläche aufweist, die zur Begrenzung der Axialbewegung des Aufweitelements beim axialen Verspannen mit einer Gegenfläche am Aufweitelement zusammenwirkt.

Die Montage des Aufweitelements an der Spreizhülse lässt sich besonders einfach und sicher durchführen, wenn die Gegenfläche an einem der Spreizhülse zugewandten Endbereich des Aufweitelements an der Stirnseite des Endbereichs ausgebildet ist, wobei der Endbereich einen Außendurchmesser aufweist, der maximal der lichten Innenweite der Spreizzinnen im radial nicht aufgeweiteten Zustand entspricht, so dass der Endbereich des Aufweitelements beim axialen Verspannen axial zwischen die Spreizzinnen einführbar ist.

Besonders bevorzugt ist es, wenn die Spreizzinnen eine, insbesondere deutlich, geringere Axialerstreckung aufweisen als das Gegengewinde der Spreizhülse. Weiter bevorzugt ist es, wenn sich die Spreizzinnen ausgehend von einem axialen, dem Aufweitelement zugewandten Ende eines das Gegengewinde aufweisenden Mittelbereichs der Spreizhülse in Richtung Aufweitelement erstrecken, also nicht auf der davon abgewandten Seite abragen und in Richtung Aufweitelement umgebogen sind. Anders ausgedrückt sind die Spreizzinnen vorzugsweise ausschließlich endseitig an der Spreizhülse angeordnet und erstrecken sich axial von dem Gegengewinde weg in Richtung Aufweitelement.

Wie bereits eingangs erläutert, ist es besonders bevorzugt vorgesehen, dass das Spannelement gleichzeitig eine Befestigungsschraube für das Bauteil am Trägerelement ausbildet. Dadurch kann die Montage des Verankerungselements am Trägerelement gleichzeitig mit der Montage des Bauteils an dem Trägerelement erfolgen.

Um insbesondere bei sandwichartigen bzw. rohrförmigen Trägerelementen eine einfache Montage der Spreizhülse zu ermöglichen, ist es bevorzugt vorgesehen, dass der Durchmesser der Spreizhülse dem Durchmesser der in der Wand des Trägerelements ausgebildeten Durchgangsöffnung für die Spreizhülse angepasst ist, derart, dass der Durchmesser der Spreizhülse bei radial nicht aufgeweiteten Spreizzinnen maximal dem Durchmesser der Durchgangsöffnung entspricht. Vorzugsweise ist der Durchmesser der Spreizhülse dabei lediglich etwas kleiner als der Durchmesser der Durchgangsöffnung in dem Trägerelement, da dann bereits ein relativ geringes radiales Aufweiten der Spreizzinnen an der Spreizhülse eine sichere Verankerung bzw. eine sicheres Festlegen der Spreizhülse an dem Trägerelement ermöglicht.

Um eine Bewegung der Verankerungseinrichtung in einer Ebene senkrecht zur Längsachse der Spreizhülse und des Aufweitelements zu vermeiden, ist es darüber hinaus besonders bevorzugt vorgesehen, dass der Durchmesser des Aufweitelements dem Durchmesser der Durchgangsöffnung entspricht.

Eine fertigungstechnisch vorteilhafte Ausgestaltung der Spreizhülse, bei der sich diese mit relativ geringem Aufwand kostengünstig herstellen lässt, ist gegeben, wenn die Anschlagfläche durch eine Stirnfläche der Spreizhülse gebildet ist, von der sich die Spreizzinnen in axialer Richtung erstrecken.

Um die Verankerungseinrichtung auch bei Trägerelementen einzusetzen, bei der die Verankerungseinrichtung lediglich an einer einzigen Wand der Trägereinrichtung verankert werden kann, ist es vorgesehen, dass das Gewinde als Innengewinde in der Spreizhülse ausgebildet ist, und dass das Gegengewinde am Spannelement ausgebildet ist.

Die erfindungsgemäße Verankerungseinrichtung eignet sich jedoch auch, wie in der nachveröffentlichten DE 10 2010 026 965 A1 dargestellt, für den Einsatz an sandwichartigen bzw. rohrförmigen Trägerelementen, die zwei voneinander beabstandete Wände aufweisen. Um hierbei insbesondere die Spreizhülse senkrecht zu den Wänden ausrichten und festlegen zu können wird in einer konstruktiven Ausgestaltung vorgeschlagen, dass auf der dem Aufweitelement abgewandten Seite der Spreizhülse eine weitere Durchgangsbohrung ausgebildet ist, in die ein im Endabschnitt im Durchmesser gegenüber einem Mittelbereich verkleinerter Abschnitt der Spreizhülse eingreift und mit einer Stufe an der dem Aufweitelement zugewandten Seite in der Wand axial anliegt.

Ganz besonders sicher lässt sich die Verankerungseinrichtung dabei an dem Trägerelement anordnen, wenn die als Spannelement wirkende Befestigungsschraube mit einer Befestigungsmutter zusammenwirkt, die eine axiale Verspannung der Spreizhülse zum Aufweitelement bewirkt.

Die Erfindung führt auch auf eine Befestigungsanordnung, d.h. ein Befestigungssystem, umfassend ein Trägerelement, eine nach dem Konzept der Erfindung ausgebildete Verankerungseinrichtung und ein Bauteil, welches mittels der Verankerungseinrichtung am Trägerelement festgelegt ist. Im montierten Zustand sind die Spreizzinnen der Spreizhülse der Verankerungseinrichtung, vorzugsweise plastisch, mittels des Aufweitelementes der Verankerungseinrichtung, d.h. durch verformende Wechselwirkung mit diesen aufgeweitet, d.h. gespreizt. Vorzugsweise überragt die Verankerungseinrichtung das Trägerelement nicht, sondern ist vollständig axial innerhalb von diesem aufgenommen, vorzugsweise derart, dass eine Stirnseite des Aufweitelementes in einer gemeinsamen Ebene mit einer Außenoberfläche des Trägerelementes angeordnet ist, so dass das Bauteil planeben auf dem Trägerelement aufliegt.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1 bis Fig. 3: eine erste erfindungsgemäße Verankerungseinrichtung unter Verwendung eines rohrförmigen Trägerelements mit deren Bauteilen während verschiedener Montagestufen, jeweils in teilweise geschnittenen Seitenansichten,
- Fig. 4 bis Fig. 6: eine zweite, gegenüber er ersten Verankerungseinrichtung modifizierte Verankerungseinrichtung, ebenfalls während verschiedener Montagestufen in teilweise geschnittenen Seitenansichten und
- Fig. 7 bis Fig. 9: eine dritte erfindungsgemäße Verankerungseinrichtung zur Verwendung an einem plattenförmigen Trägerelement, ebenfalls während verschiedener Montagestufen in teilweise geschnittenen Seitenansichten.

Gleiche Bauteile bzw. Bauteile mit gleicher Funktion sind in den Figuren mit den gleichen Bezugsziffern versehen.

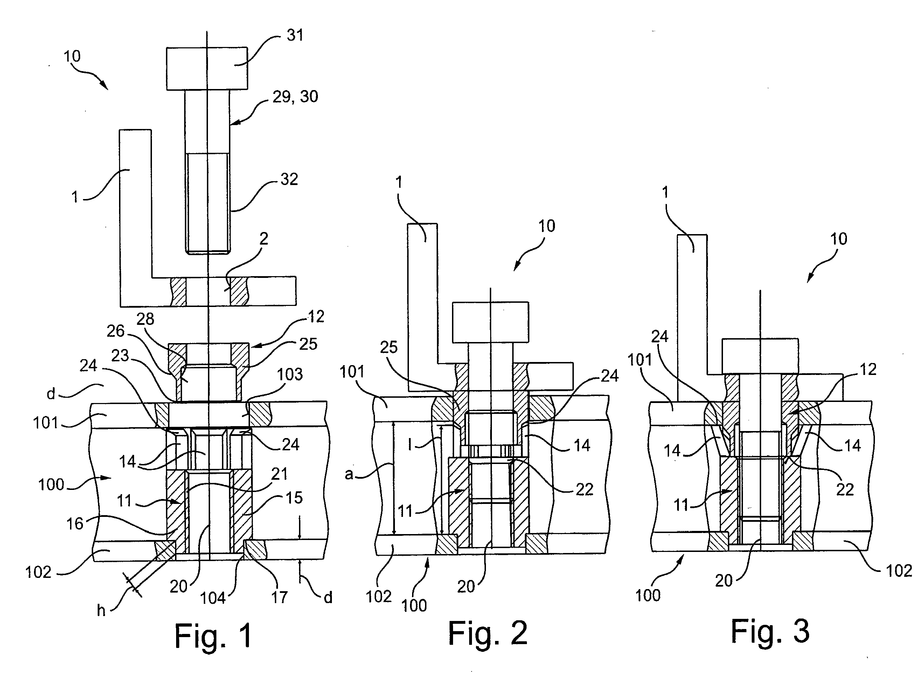

In den Fig. 1 bis 3 ist eine erste erfindungsgemäße Verankerungseinrichtung 10 zum Befestigen eines Bauteils 1 an einem Trägerelement 100 dargestellt. Das Bauteil 1 ist im dargestellten Ausführungsbeispiel beispielsweise als im Querschnitt L-förmiger Profilstab oder als Befestigungswinkel ausgebildet, das eine Durchgangsbohrung 2 aufweist. Bei dem Trägerelement 100 handelt es sich beispielsweise um einen einen rechteckförmigen oder quadratischen Querschnitt aufweisenden Profilstab, beispielsweise aus Aluminium, mit zwei parallel zueinander angeordneten Wänden 101, 102.

Es liegt auch im Rahmen der Erfindung, als Trägerelement 100 beispielsweise eine sandwichartige Struktur vorzusehen, wie diese in der nachveröffentlichten DE 10 2010 026 965 A1 der Anmelderin offenbart ist.

Das Trägerelement 100 weist an der den Bauteil 1 zugewandten Wand 101 eine erste Durchgangsbohrung 103 auf, und an der anderen Wand 102 eine zweite Durchgangsbohrung 104, wobei der Durchmesser der ersten Durchgangsbohrung 103 größer ist als der Durchmesser der zweiten Durchgangsbohrung 104.

Die Verankerungseinrichtung 10 umfasst eine Spreizhülse 11 und einen mit der Spreizhülse 11 zusammenwirkenden, als Aufweitelement wirkenden Aufweitring 12. Die Spreizhülse 11 weist mehrere, bevorzugt in gleichmäßigen Winkelabständen zueinander angeordnete Spreizzinnen 14 auf, die zunächst in Längsrichtung der Spreizhülse 11 verlaufen. Die an dem einen Ende der Spreizhülse 11 angeordneten Spreizzinnen 14 schließen sich in axialer Richtung an einen zylindrischen Mittelbereich 15 der Spreizhülse 11 an, wobei der Außendurchmesser des Mittelbereichs 15 dem Außendurchmesser der Spreizzinnen 14 entspricht. Auf der den Spreizzinnen 14 gegenüberliegenden Seite des Mittelbereichs 15 weist die Spreizhülse 11 einen im Durchmesser gegenüber den Mittelbereich 15 verringerten Endabschnitt 16 auf. Der Durchmesser des Endabschnitts 16 entspricht dem Durchmesser der zweiten Durchgangsbohrung 104 in der Wand 102 des Trägerelements 100. Die Höhe h des Endabschnitts 16 entspricht maximal der Wanddicke d der Wand 102. Daraus ergibt sich, dass entsprechend der Fig. 1 bis 3 die Spreizhülse 11 innerhalb des Trägerelements 100 mit ihrem Endabschnitt 16 innerhalb der zweiten Durchgangsbohrung 104 angeordnet ist, wobei die Spreizhülse 11 auf der Wand 102 an der Stufe 17 der Spannhülse 11 aufliegt.

Die Spreizhülse 11 weist in Ausrichtung mit deren Längsachse 20 im Mittelbereich 15 und im Endabschnitt 16 ein durchgehendes Innengewinde 21 auf. Weiterhin weist die axiale Länge des Mittelbereichs 15 und der Spreizzinnen 14 insgesamt eine Länge I auf, die dem Abstand a der Wände 101 und 102 im Trägerelement 100 entspricht bzw. etwas geringer ist als der Abstand a. Wie insbesondere anhand der Fig. 2 und 3 erkennbar ist, weist der Mittelbereich 15 im Übergangsbereich zu den Spreizzinnen 14 eine senkrecht zur Längsachse 20 ausgerichtete Anschlagfläche 22 auf, von der auch die Spreizzinnen 14 ausgehen, wobei der radial innere Bereich der Anschlagfläche 22 spreizzinnenfrei ausgebildet ist.

Die Spreizzinnen 14 weisen auf ihrer dem Mittelbereich 15 abgewandten Seite jeweils gegenüber der Längsachse 20 schräg angeordnete bzw. ausgebildete erste Kontaktflächen 24 auf. Der Außendurchmesser der Spreizhülse 11 ist dem Durchmesser der ersten Durchgangsbohrung 103 im Trägerelement 100 derart angepasst, dass der Außendurchmesser der Spreizhülse 11 in etwa dem Durchmesser der ersten Durchgangsbohrung 103 entspricht bzw. vorzugsweise geringfügig kleiner ist als der Durchmesser der ersten Durchgangsbohrung 103.

Der Aufweitring 12 weist einen Außendurchmesser auf, der dem Durchmesser der ersten Durchgangsbohrung 103 angepasst ist. Insbesondere weist der Außendurchmesser des Aufweitrings 12 maximal den Durchmesser der ersten Durchgangsbohrung 103 auf. Auf der der Spreizhülse 11 zugewandten Seite weist der Aufweitring 12 einen konusförmigen Aufweitbereich 25 auf, dessen Umfangsfläche eine zweite Kontaktfläche 26 ausbildet. Das Material des Aufweitrings 12 weist wenigstens die gleichen, vorzugsweise jedoch höheren Festigkeitswerte als die Spreizhülse 11, zumindest in dem Bereich deren Spreizzinnen 14, auf. Die zweite Kontaktfläche 26 ist ebenfalls gegen die Längsachse 20 schräg bzw. geneigt angeordnet, wobei deren Neigung vorzugsweise der Neigung der ersten Kontaktfläche 24 an den Spreizzinnen 14 entspricht. An den Aufweitbereich 25 schließt sich auf der der Spreizhülse 11 zugewandten Seite ein zylindrischer Führungsabschnitt 27 mit einer an der Stirnseite angeordneten Anschlagfläche 23 an. Die Gesamthöhe des Aufweitrings 12 ist etwas größer als die Höhe der Spreizzinnen 14 sowie die Dicke d der Wand 101. Der Aufweitring 12 weist eine durchgehende Innenbohrung 28 auf, die ggf. als Stufenbohrung (wie dargestellt) ausgebildet ist. Der Durchmesser der Innenbohrung 28 ist etwas größer als der Außendurchmesser eines stiftförmigen Spannelements 29, das bevorzugt als Spannschraube 30 ausgebildet ist. Hierbei weist die Spannschraube 30 einen Kopf 31 und einen Außengewindeabschnitt 32 auf, der mit dem Innengewinde 21 der Spreizhülse 11 zusammenwirkt. Die Länge L des Aufweitrings 12 entspricht wenigstens der Wanddicke d der Wand 101.

Die Montage der Verankerungseinrichtung 10 und des Bauteils 1 an dem Trägerelement 100 wird nachfolgend wie folgt erläutert: in einem ersten Schritt müssen die beiden Durchgangsbohrungen 103 und 104 in den Wänden 101 und 102 des Trägerelements 100 ausgebildet werden. Anschließend wird die Spreizhülse 11 durch die erste Durchgangsbohrung 102 in den Innenraum des Trägerelements 100 eingeschoben, bis der Endabschnitt 16 der Spreizhülse 11 sich im Bereich der zweiten Durchgangsbohrung 104 befindet. Anschließend wird der Aufweitring 12 in die erste Durchgangsbohrung 103 eingesetzt, wobei der Führungsabschnitt 27 in den axialen Bereich der Spreizzinnen 14 gerät und von diesem radial geführt wird. Das Einsetzen erfolgt ohne wesentlichen Kraftaufwand, bis die ersten Kontaktbereiche 24 der Spreizzinnen 14 in Wirkverbindung mit der zweiten Kontaktfläche 26 am Aufweitring 12 gelangt, wie dies in der Fig. 2 dargestellt ist. Dann wird die Spannschraube 30 unter gleichzeitiger Befestigung des Bauteils 1 in den aus Spreizhülse 11 und Aufweitring 12 gebildeten Bauteileverbund eingebracht, bis der Außengewindeabschnitt 32 der Spannschraube 30 in Wirkverbindung mit dem Innengewinde 21 der Spreizhülse 11 gerät.

Beim Einschrauben der Spannschraube 30 in die Spreizhülse 11 gelangt zunächst der Kopf 31 der Spannschraube 30 in Wirkverbindung mit dem Bauteil 1, welches anschließend den Aufweitring 12 axial weiter in Richtung auf die Spannhülse 11 bewegt. Dadurch wird über die Kontaktflächen 24 und 26 eine in radialer Richtung wirkende Spreizkraft auf die Spreizzinnen 14 erzeugt, die entsprechend der Fig. 3 eine radiale Aufweitung der Spreizzinnen 14 erzeugt, bis sich diese radial außerhalb der ersten Durchgangsbohrung 103 befinden.

Das axiale Verspannen des Aufweitrings 12 mit der Spreizhülse 11 kann solange erfolgen, bis der Führungsabschnitt 27 des Aufweitrings 12 in Wirkverbindung auf die Anschlagfläche 22 der Spreizhülse 11 gelangt, wodurch eine weitere Axialbewegung des Aufweitrings 12 verhindert wird. Gleichzeitig ist das Bauteil 1 dadurch an dem Trägerelement 100 befestigt.

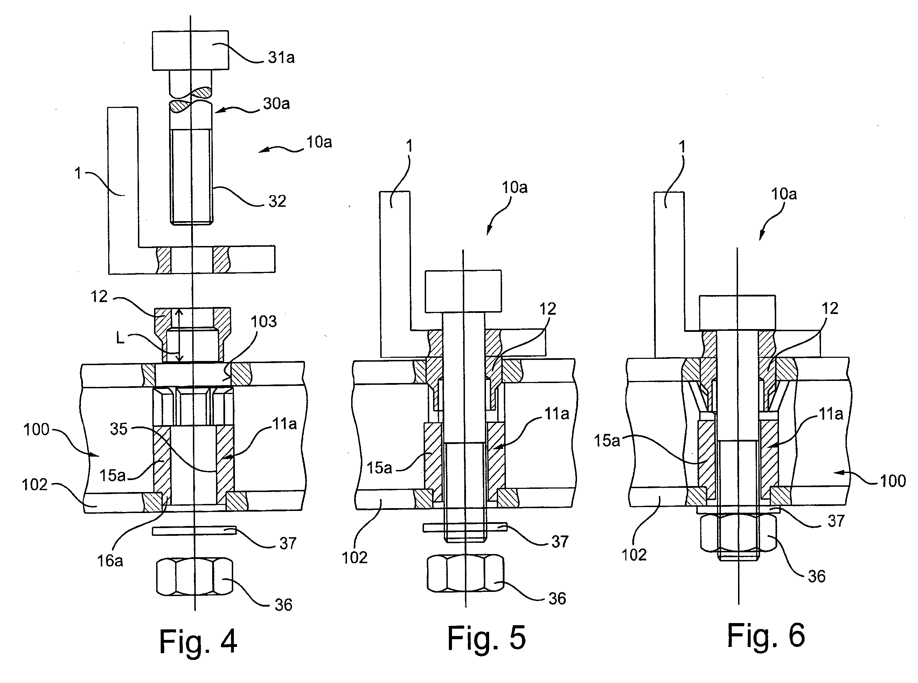

Bei dem in den Fig. 4 bis 6 dargestellten zweiten Ausführungsbeispiel der Erfindung weist die Verankerungseinrichtung 10a im Gegensatz zur Verankerungseinrichtung 10 eine Spreizhülse 11a auf, die kein Innengewinde hat. Vielmehr ist im Mittelbereich 15a und im Bereich des Endabschnitts 16a eine durchgehende Bohrung 35 ausgebildet, deren Durchmesser größer ist als der Durchmesser der Spannschraube 30a. Die Spannschraube 30a weist gegenüber der Spannschraube 30 eine vergrößerte Länge auf, derart, dass das dem Kopf 31 a der Spannschraube 30a gegenüberliegende Ende der Spannschraube 30a aus der Wand 102 des Trägerelements 100 herausragt und zum Aufbringen der axialen Spannkraft zwischen dem Aufweitring 12 und der Spreizhülse 11a in Wirkverbindung unter Zwischenlage einer Unterlegscheibe 37 mit einer Mutter 36 angeordnet werden kann, deren Innengewinde mit dem Außengewindeabschnitt 32 der Spannschraube 30a zusammenwirkt.

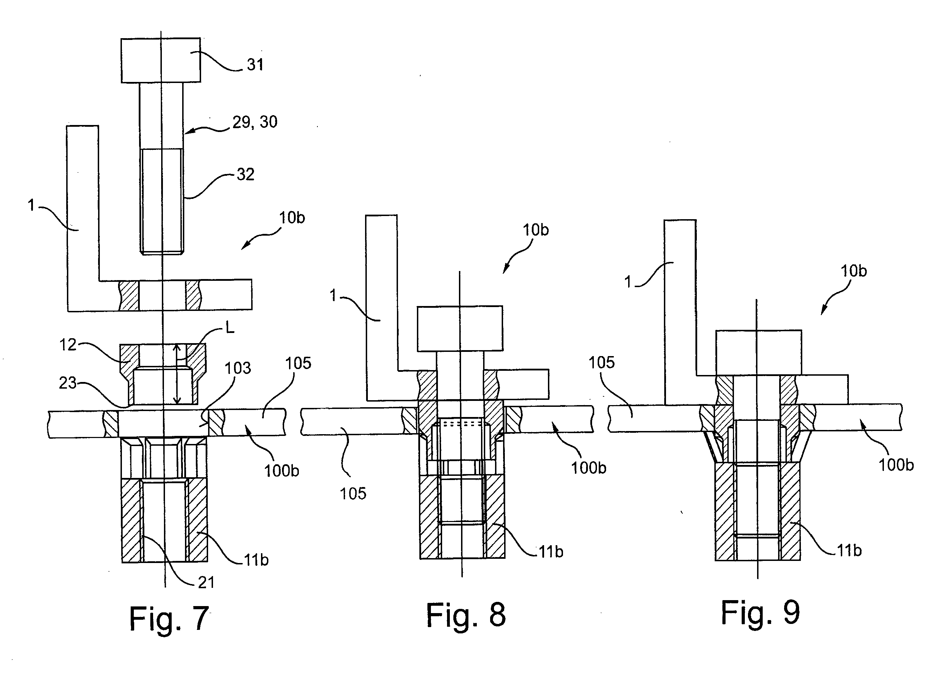

In den Fig. 7 bis 9 ist ein drittes Ausführungsbeispiel der Erfindung dargestellt. Die dort verwendete Verankerungseinrichtung 10b dient der Befestigung des Bauteils 1 an einem Trägerelement 100b, das lediglich eine einzige Wand 105 aufweist. In diesem Fall kann es vorgesehen sein, dass die Spreizhülse 11 b, die ansonsten identisch zu der Spreizhülse 11 der Verankerungseinrichtung 10 ausgebildet ist, das heißt insbesondere auch ein Innengewinde 21 aufweist, keinen im Durchmesser verringerten Endabschnitt 16, 16a aufweist.

### Bezugszeichenliste

- 1: Bauteil
- 2: Durchgangsbohrung

- 10: Verankerungseinrichtung
- 10a: Verankerungseinrichtung
- 10b: Verankerungseinrichtung

- 11: Spreizhülse
- 11a: Spreizhülse
- 11b: Spreizhülse
- 12: Aufweitring

- 14: Spreizzinne
- 15: Mittelbereich
- 15a: Mittelbereich
- 16: Endabschnitt
- 16a: Endabschnitt
- 17: Stufe

- 20: Längsachse
- 21: Innengewinde
- 22: Anschlagfläche

- 24: erste Kontaktfläche
- 25: Aufweitbereich
- 26: zweite Kontaktfläche
- 27: Führungsabschnitt
- 28: Innenbohrung
- 29: Spannelement
- 30: Spannschraube
- 30a: Spannschraube
- 31: Kopf
- 31a: Kopf
- 32: Außengewindeabschnitt

- 35: Bohrung
- 36: Mutter
- 37: Unterlegscheibe

- 100: Trägerelement
- 100b: Trägerelement
- 101: Wand

- 102: Wand
- 103: Durchgangsbohrung
- 104: Durchgangsbohrung
- 105: Wand

- a: Abstand
- d: Wanddicke
- h: Höhe
- l, L: Länge

## Patentansprüche

1. Verankerungseinrichtung (10; 10a; 10b) zum Befestigen eines Bauteils (1) an einem Trägerelement (100; 100b), mit einer hülsenförmigen Spreizhülse (11; 11a; 11b), die auf der einer Wand (101; 105) des Trägerelements (100; 100b) zugewandten Seite mehrere, vorzugsweise in gleichen Winkelabständen zueinander angeordnete, axial ausgerichtete und radial aufweitbare Spreizzinnen (14) aufweist, wobei die Spreizzinnen (14) in ihrem radial aufgeweiteten Zustand an der Wand (101; 105) des Trägerelements (100; 100b) anliegen und die Spreizhülse (11; 11a; 11b) in Richtung zur Wand (101; 105) axial festlegen, wobei die Spreizhülse (11; 11 a; 11 b) zum radialen Aufweiten der Spreizzinnen (14) mit einem hülsenförmigen Aufweitelement (12) zusammenwirkt, das eine im Trägerelement (100; 100b) ausgebildete Durchgangsöffnung (103) durchsetzt, und das auf der der Spreizhülse (11; 11a; 11b) zugewandten Seite axial in den Bereich der Spreizzinnen (14) eintaucht, wobei bei einen axialen Verspannen zwischen dem Aufweitelement (12) und der Spreizhülse (11; 11a; 11b) die Spreizzinnen (14) vom Aufweitelement (12) radial aufweitet werden, wobei das axiale Verspannen mittels eines Gewindes (32) eines das Aufweitelement (12) duchsetzenden Spannelements (30; 30a) erfolgt, das mit einem Gegengewinde (21) zusammenwirkt, wobei das Spannelement (30; 30a) zumindest mittelbar in Anlagekontakt mit der der Spreizhülse (11; 11a; 11b) abgewandten Seite des Aufweitelements (12) angeordnet ist,
**dadurch gekennzeichnet,**
**dass** der Durchmesser des Aufweitelements (12) dem Durchmesser der Durchgangsöffnung (103) entspricht.

2. Verankerungseinrichtung nach Anspruch 1,
**dadurch gekennzeichnet,**
**dass** das Aufweitelement (12) eine axiale Länge aufweist, die mindestens der Wanddicke (d) der Wand (101; 105) des Trägerelements (100; 100b) im Bereich des Aufweitelements (12) entspricht.

3. Verankerungseinrichtung nach einem der Ansprüche 1 oder 2,
**dadurch gekennzeichnet,**
**dass** das Aufweitelement (12) einen Aufweitbereich (25) aufweist, dass der Aufweitbereich (25) einen größeren Durchmesser aufweist als die Spreizzinnen (14) an der Spreizhülse (11; 11a; 11b) im radial unaufgeweiteten Zustand auf der dem Aufweitbereich (25) zugewandten Seite, und dass der Aufweitbereich (25) und/oder die Spreizzinnen (14) an den miteinander beim axialen Verspannen zusammenwirkenden Kontaktflächen (24, 26) in Bezug zur deren Längsachse (20) zur Erzeugung einer radial wirkenden Spreizkraft schräg geneigt angeordnet ist/sind.

4. Verankerungseinrichtung nach einem der vorhergehenden Ansprüche, **dadurch gekennzeichnet,**
**dass** die Spreizhülse (11; 11a; 11 b) eine Anschlagfläche (22) aufweist, die zur Begrenzung der Axialbewegung des Aufweitelements (12) beim axialen Verspannen mit einer Gegenfläche (23) am Aufweitelement (12) zusammenwirkt.

5. Verankerungseinrichtung nach Anspruch 4,
**dadurch gekennzeichnet,**
**dass** die Gegenfläche (23) an einem der Spreizhülse (11; 11a; 11b) zugewandten Endbereich (27) des Aufweitelements (12) an der Stirnseite des Endbereichs (27) ausgebildet ist, wobei der Endbereich (27) einen Außendurchmesser aufweist, der maximal der lichten Innenweite der Spreizzinnen (14) im radial nicht aufgeweiteten Zustand entspricht, so dass der Endbereich (27) des Aufweitelements (12) beim axialen Verspannen axial zwischen die Spreizzinnen (14) einführbar ist.

6. Verankerungseinrichtung nach einem der Ansprüche 1 bis 5
**dadurch gekennzeichnet,**
**dass** das Spannelement (30; 30a) gleichzeitig eine, vorzugsweise ein Schraubkopf aufweisendes, Befestigungsschraube für das Bauteil (1) am Trägerelement (100; 100b) ausbildet.

7. Verankerungseinrichtung nach einem der Ansprüche 1 bis 6,
**dadurch gekennzeichnet,**
**dass** der Durchmesser der Spreizhülse (11; 11a; 11b) dem Durchmesser der in der Wand (101; 105) des Trägerelements (100; 100b) ausgebildeten Durchgangsöffnung (103) für die Spreizhülse (11; 11a; 11b) angepasst ist, derart, dass der Durchmesser der Spreizhülse (11; 11a; 11b) bei radial nicht aufgeweiteten Spreizzinnen (14) maximal dem Durchmesser der Durchgangsöffnung entspricht.

8. Verankerungseinrichtung nach einem der Ansprüche 1 bis 7,
**dadurch gekennzeichnet,**
**dass** das Aufweitelement (12) eine Durchgangsbohrung (28) aufweist, deren Durchmesser größer ist als der Durchmesser des Spannelements (30; 30a) in dessen Schaftbereich.

9. Verankerungseinrichtung nach Anspruch 4 bis 8,
**dadurch gekennzeichnet,**
**dass** die Anschlagfläche (22) durch eine Stirnfläche der Spreizhülse (11; 11a; 11b) gebildet ist, von der sich die Spreizzinnen (14) in axialer Richtung erstrecken.

10. Verankerungseinrichtung nach einem der Ansprüche 1 bis 9,
**dadurch gekennzeichnet,**
**dass** das Gewinde als Innengewinde (21) in der Spreizhülse (11; 11b) ausgebildet ist, und dass das Gewinde (32) am Spannelement (30) ausgebildet ist.

11. Verankerungseinrichtung nach einem der Ansprüche 1 bis 10,
**dadurch gekennzeichnet,**
**dass** das Aufweitelement (12) aus einem Material besteht, das wenigstens dieselbe Festigkeit aufweist wie die Spreizhülse (11; 11a; 11b).

12. Befestigungsanordnung umfassend ein Trägerelement (100; 100b), eine Verankerungseinrichtung (10; 10a; 10b) nach einem der vorhergehenden Ansprüche und ein an dem Trägerelement (100, 100b) mittels der Verankerungseinrichtung (10, 10a, 10b) befestigtes Bauteil (1), wobei die Spreizzinnen (14) mittels des Aufweitelementes (12) plastisch radial aufgeweitet sind,
**dadurch gekennzeichnet,**
**dass** das Aufweitelement (12) vollständig axial in dem Trägerelement (100, 100b) versenkt ist, derart, dass eine dem Bauteil (1) zugewandte Stirnseite des Aufweitelementes (12) in einer gemeinsamen Ebene mit einer dem
Bauteil (1) zugewandte Außenoberfläche des Trägerelements (100, 100b) angeordnet ist.

13. Befestigungsanordnung nach Anspruch 12,
**dadurch gekennzeichnet,**
**dass** das Trägerelement (100) zwei zueinander parallele Wände (101, 102) aufweist, die senkrecht zur Längsachse (20) der Spreizhülse (11; 11a) und des Aufweitelements (12) angeordnet sind, und dass auf der dem Aufweitelement (12) abgewandten Seite der Spreizhülse (11; 11a) eine weitere Durchgangsbohrung (104) in der einen Wand (102) ausgebildet ist, in die
ein im Endabschnitt (16; 16a) im Durchmesser gegenüber einem Mittelbereich (15; 15a) verkleinerter Abschnitt der Spreizhülse (11; 11a) eingreift und mit einer Stufe (17) an der dem Aufweitelement (12) zugewandten Seite an der Wand (102) axial aufliegt.

14. Befestigungsanordnung nach Anspruch 12,
**dadurch gekennzeichnet**,
**dadurch gekennzeichnet,**
**dass** das Trägerelement (100) zwei zueinander parallele Wände (101, 102) aufweist, die senkrecht zur Längsachse (20) der Spreizhülse (11 a) und des Aufweitelements (12) angeordnet sind, und dass auf der dem Aufweitelement (12) abgewandten Seite der Spreizhülse (11a) eine weitere Durchgangsbohrung (104) in der einen Wand (102) ausgebildet ist, in die ein im Endabschnitt (16a) im Durchmesser gegenüber einem Mittelbereich (15a) verkleinerter Abschnitt der Spreizhülse (11a) eingreift und mit einer Stufe (17) an der dem Aufweitelement (12) zugewandten Seite an der Wand (102) axial aufliegt, und dass das Gewinde an einer Befestigungsmutter (36) für das Spannelement (30a) angeordnet ist.

15. Befestigungsanordnung nach einem der Ansprüche 12 bis 14,
**dadurch gekennzeichnet,**
**dass** die axiale Länge (I) der Spreizzinnen (14) und des Mittelbereichs (15; 15a) der Spreizhülse (11; 11a) maximal dem Abstand (a) zwischen den beiden Wänden (101, 102) des Trägerelementes (100) entspricht.

16. Befestigungsanordnung nach einem der Ansprüche 13 bis 15,
**dadurch gekennzeichnet,**
**dass** die Höhe (h) des Endabschnitts (16; 16a) maximal der Wanddicke (d) der Wand (102) des Trägerelements (100) entspricht.

## Claims

1. An anchoring device (10; 102; 10b) for fastening a component (1) to a carrier element (100; 100b), having a sleeve-shaped expansion sleeve (11; 11a; 11b), which has on the side facing a wall (101; 105) of the carrier element (100; 100b) a plurality of expanding teeth (14), which are preferably arranged at equal angular distances from each other, are aligned axially and can be spread radially, wherein the expanding teeth (14) bear against the wall (101; 105) of the carrier element (100; 100b) when in their radially spread state and axially fix the expansion sleeve (11; 11a; 11b) in the direction of the wall (101; 105), wherein to radially spread the expanding teeth (14) the expansion sleeve (11; 11a; 11b) interacts with a sleeve-shaped spreading element (12), which penetrates a through-opening (103) formed in the carrier element (100; 100b) and goes axially into the region of the expanding teeth (14) on the side facing the expansion sleeve (11; 11a; 11b), wherein the expanding teeth (14) are spread radially by the spreading element (12) when clamped axially between the spreading element (12) and the expansion sleeve (11; 11a; 11b), wherein the axial clamping takes place by means of a thread (32) of a clamping element (30; 30a), which penetrates the spreading element (12) and interacts with a counter thread (21), wherein the clamping element (30; 30a) is arranged at least indirectly in bearing contact with the side of the spreading element (12) that faces away from the expansion sleeve (11; 11a; 11b),
**characterised in that**
the diameter of the spreading element (12) corresponds to the diameter of the through-opening (103).

2. The anchoring device according to claim 1, **characterised in that**
the spreading element (12) has an axial length that corresponds to at least the wall thickness (d) of the wall (101; 105) of the carrier element (100; 100b) in the region of the spreading element (12).

3. The anchoring device according to one of claims 1 or 2,
**characterised in that**
the spreading element (12) has a spreading region (25), that the spreading region (25) has a greater diameter than the expanding teeth (14) on the expansion sleeve (11; 11a; 11b) when they are not radially spread on the side facing the spreading region (25), and that the spreading region (25) and/or the expanding teeth (14) is/are arranged in an inclined manner in relation to the longitudinal axis (20) thereof on the contact faces (24, 26) that interact with each other during the axial clamping in order to generate a radially effective expansion force.

4. The anchoring device according to any one of the preceding claims,
**characterised in that**
the expansion sleeve (11; 11a; 11b) has a stop face (22), which interacts with a counter face (23) on the spreading element (12) to limit the axial movement of the spreading element (12) during axial clamping.

5. The anchoring device according to claim 4, **characterised in that**
the counter face (23) is formed on an end region (27) of the spreading element (12) facing the expansion sleeve (11; 11a; 11b) on the end face of the end region (27), wherein the end region (27) has an outer diameter that corresponds to no more than the clear inner width of the expanding teeth (14) when they are not spread, so that the end region (27) of the spreading element (12) can be introduced axially between the expanding teeth (14) during the axial clamping.

6. The anchoring device according to any one of claims 1 to 5,
**characterised in that**
the clamping element (30; 30a) at the same time forms a fastening screw, which preferably has a screw head, for the component (1) on the carrier element (100; 100b).

7. The anchoring device according to any one of claims 1 to 6,
**characterised in that**
the diameter of the expansion sleeve (11; 11a; 11b) is adapted to the diameter of the through-opening (103) for the expansion sleeve (11; 11a; 11b), which is formed in the wall (101; 105) of the carrier element (100; 100b), in such a manner that the diameter of the expansion sleeve (11; 11a; 11b) corresponds to no more than the diameter of the through-opening when the expanding teeth (14) are not radially spread.

8. The anchoring device according to any one of claims 1 to 7,
**characterised in that**
the spreading element (12) has a through-bore (28), the diameter of which is greater than the diameter of the clamping element (30; 30a) in the shaft region thereof.

9. The anchoring device according to claim 4 to 8, **characterised in that**
the stop face (22) is formed by an end face of the expansion sleeve (11; 11a; 11b) from which the expanding teeth (14) extend in the axial direction.

10. The anchoring device according to any one of claims 1 to 9,
**characterised in that**
the thread is formed as an inner thread (21) in the expansion sleeve (11; 11b) and that the thread (32) is formed on the clamping element (30).

11. The anchoring device according to any one of claims 1 to 10,
**characterised in that**
the spreading element (12) consists of a material that has at least the same strength as the expansion sleeve (11; 11a; 11b).

12. A fastening arrangement comprising a carrier element (100; 100b), an anchoring device (10; 10a; 10b) according to any one of the preceding claims and a component (1) fastened to the carrier element (100, 100b) by means of the anchoring device (10, 10a, 10b), wherein the expanding teeth (14) are spread plastically and radially by means of the spreading element (12),
**characterised in that**
the spreading element (12) is completely sunk axially in the carrier element (100, 100b) in such a manner that an end face of the spreading element (12) facing the component (1) is arranged in a common plane with an outer surface of the carrier element (100, 100b) facing the component (1).

13. The fastening arrangement according to claim 12, **characterised in that**
the carrier element (100) has two walls (101, 102) parallel to each other, which are arranged perpendicularly to the longitudinal axis (20) of the expansion sleeve (11; 11a) and of the spreading element (12), and that on the side of the expansion sleeve (11; 11a) facing away from the spreading element (12) a further through-bore (104) is formed in one wall (102), into which a section of the expansion sleeve (11; 11a), which section has a smaller diameter in the end section (16; 16a) than in a middle section (15; 15a), engages and bears axially with a step (17) against the wall (102) on the side facing the spreading element (12).

14. The fastening arrangement according to claim 12, **characterised in that**
the carrier element (100) has two walls (101, 102) parallel to each other, which are arranged perpendicularly to the longitudinal axis (20) of the expansion sleeve (11a) and of the spreading element (12), and that on the side of the expansion sleeve (11a) facing away from the spreading element (12) a further through-bore (104) is formed in one wall (102), into which a section of the expansion sleeve (11a), which section has a smaller diameter in the end section (16a) than in a middle section (15a), engages and bears axially with a step (17) against the wall (102) on the side facing the spreading element (12), and that the thread is arranged on a fastening nut (36) for the clamping element (30a).

15. The fastening arrangement according to any one of claims 12 to 14,
**characterised in that**
the axial length (1) of the expanding teeth (14) and of the middle region (15; 15a) of the expansion sleeve (11; 11a) corresponds to no more than the distance (a) between the two walls (101, 102) of the carrier element (100).

16. The fastening arrangement according to any one of claims 13 to 15,
**characterised in that**
the height (h) of the end section (16; 16a) corresponds to no more than the wall thickness (d) of the wall (102) of the carrier element (100).

## Revendications

1. Dispositif d'ancrage (10; 10a; 10b) destiné à fixer une pièce (1) sur un élément de support (100; 100b), avec une douille expansible en forme de douille (11; 11a; 11b), qui présente sur le côté tourné vers une paroi (101; 105) de l'élément de support (100; 100b) plusieurs lamelles expansibles (14), disposées de préférence à des distances angulaires égales les unes des autres, orientées axialement et expansibles radialement, dans lequel les lamelles expansibles (14) s'appliquent, dans leur état radialement expansé, sur la paroi (101; 105) de l'élément de support (100; 100b) et immobilisent axialement la douille expansible (11; 11a; 11b) dans la direction de la paroi (101; 105), dans lequel la douille expansible (11; 11a; 11b) coopère avec un élément d'expansion en forme de douille (12) pour l'expansion radiale des lamelles expansibles (14), qui traverse une ouverture de passage (103) pratiquée dans l'élément de support (100; 100b) et qui plonge, sur le côté tourné vers la douille expansible (11; 11a; 11b), axialement dans la région des lamelles expansibles (14), dans lequel les lamelles expansibles (14) sont écartées radialement par l'élément d'expansion (12) lors d'un serrage axial entre l'élément d'expansion (12) et la douille expansible (11; 11a; 11b), dans lequel le serrage axial est effectué au moyen d'un filet (32) d'un élément de serrage (30; 30a) traversant l'élément d'expansion (12), qui coopère avec un filet opposé (21), dans lequel l'élément de serrage (30; 30a) est disposé au moins indirectement en contact d'appui avec le côté de l'élément d'expansion (12) situé à l'opposé de la douille expansible (11; 11a; 11b), **caractérisé en ce que** le diamètre de l'élément d'expansion (12) correspond au diamètre de l'ouverture de passage (103).

2. Dispositif d'ancrage selon la revendication 1, **caractérisé en ce que** l'élément d'expansion (12) présente une longueur axiale qui correspond au moins à l'épaisseur de paroi (d) de la paroi (101; 105) de l'élément de support (100; 100b) dans la région de l'élément d'expansion (12).

3. Dispositif d'ancrage selon une des revendications 1 ou 2, **caractérisé en ce que** l'élément d'expansion (12) présente une zone d'expansion (25), **en ce que** la zone d'expansion (25) présente un plus grand diamètre que les lamelles expansibles (14) sur la douille expansible (11; 11a; 11b) dans l'état radialement non expansé sur le côté tourné vers la zone d'expansion (25), et **en ce que** la zone d'expansion (25) et/ou les lamelles expansibles (14) est sont disposé(es), sur les faces de contact (24, 26) coopérant l'une avec l'autre lors du serrage axial, avec une inclinaison oblique par rapport à leur axe longitudinal (20) pour la production d'une force d'expansion agissant en direction radiale.

4. Dispositif d'ancrage selon l'une quelconque des revendications précédentes, **caractérisé en ce que** la douille expansible (11; 11a; 11b) présente une face de butée (22), qui coopère avec une face opposée (23) sur l'élément d'expansion (12) pour la limitation du mouvement axial de l'élément d'expansion (12) lors du serrage axial.

5. Dispositif d'ancrage selon la revendication 4, **caractérisé en ce que** la face opposée (23) est formée sur une région d'extrémité (27) de l'élément d'expansion (12) tournée vers la douille expansible (11; 11a; 11b) sur la face frontale de la région d'extrémité (27), dans lequel la région d'extrémité (27) présente un diamètre extérieur, qui correspond au maximum à la largeur intérieure libre des lamelles expansibles (14) dans l'état radialement non expansé, de telle manière que la région d'extrémité (27) de l'élément d'expansion (12) puisse être introduite axialement entre les lamelles expansibles (14) lors du serrage axial.

6. Dispositif d'ancrage selon l'une quelconque des revendications 1 à 5, **caractérisé en ce que** l'élément de serrage (30; 30a) forme en même temps une vis de fixation, présentant de préférence une tête de vis, pour la pièce (1) sur l'élément de support (100; 100b).

7. Dispositif d'ancrage selon l'une quelconque des revendications 1 à 6, **caractérisé en ce que** le diamètre de la douille expansible (11; 11a; 11b) est adapté au diamètre de l'ouverture de passage (103) pour la douille expansible (11; 11a; 11b) formée dans la paroi (101; 105) de l'élément de support (100; 100b), de telle manière que le diamètre de la douille expansible (11; 11a; 11b) corresponde au maximum au diamètre de l'ouverture de passage lorsque les lamelles expansibles (14) ne sont pas expansées.

8. Dispositif d'ancrage selon l'une quelconque des revendications 1 à 7, **caractérisé en ce que** l'élément d'expansion (12) présente un alésage de passage (28), dont le diamètre est plus grand que le diamètre de l'élément de serrage (30; 30a) dans la région de la tige de celui-ci.

9. Dispositif d'ancrage selon l'une quelconque des revendications 4 à 8, **caractérisé en ce que** la face de butée (22) est formée par une face frontale de la douille expansible (11; 11a; 11b), à partir de laquelle les lamelles expansibles (14) s'étendent en direction axiale.

10. Dispositif d'ancrage selon l'une quelconque des revendications 1 à 9, **caractérisé en ce que** le filet est réalisé comme un filet intérieur (21) dans la douille expansible (11; 11b), et **en ce que** le filet (32) est réalisé sur l'élément de serrage (30).

11. Dispositif d'ancrage selon l'une quelconque des revendications 1 à 10, **caractérisé en ce que** l'élément d'expansion (12) est constitué d'un matériau, qui présente au moins la même résistance que la douille expansible (11; 11a; 11b).

12. Système de fixation comprenant un élément de support (100; 100b), un dispositif d'ancrage (10; 10a; 10b) selon l'une quelconque des revendications précédentes et une pièce (1) fixée sur l'élément de support (100; 100b) au moyen du dispositif d'ancrage (10; 10a; 10b), dans lequel les lamelles expansibles (14) sont écartées plastiquement en direction radiale au moyen de l'élément d'expansion (12), **caractérisé en ce que** l'élément d'expansion (12) est complètement abaissé axialement dans l'élément de support (100; 100b), de telle manière qu'une face frontale de l'élément d'expansion (12) tournée vers la pièce (1) soit disposée dans un plan commun avec une surface extérieure de l'élément de support (100; 100b) tournée vers la pièce (1).

13. Système de fixation selon la revendication 12, **caractérisé en ce que** l'élément de support (100) présente deux parois (101, 102) parallèles l'une à l'autre, qui sont disposées perpendiculairement à l'axe longitudinal (20) de la douille expansible (11; 11a) et de l'élément d'expansion (12), et **en ce qu'**un autre alésage de passage (104) est pratiqué dans une première paroi (102), sur le côté de la douille expansible (11;
11a) situé à l'opposé de l'élément d'expansion (12), et dans lequel s'engage une section de la douille expansible (11; 11a) de diamètre réduit dans la section d'extrémité (16; 16a) par rapport à une région médiane (15; 15a) et s'applique axialement par un épaulement (17) sur la paroi (102) sur le côté tourné vers l'élément d'expansion (12).

14. Système de fixation selon la revendication 12, **caractérisé en ce que** l'élément de support (100) présente deux parois (101, 102) parallèles l'une à l'autre, qui sont disposées perpendiculairement à l'axe longitudinal (20) de la douille expansible (11a) et de l'élément d'expansion (12), **en ce qu'**un autre alésage de passage (104) est pratiqué dans une première paroi (102), sur le côté de la douille expansible (11a) situé à l'opposé de l'élément d'expansion (12), et dans lequel s'engage une section de la douille expansible (11a) de diamètre réduit dans la section d'extrémité (16a) par rapport à une région médiane (15a) et s'applique axialement par un épaulement (17) sur la paroi (102) sur le côté tourné vers l'élément d'expansion (12) et **en ce que** le filet est disposé sur un écrou de fixation (36) pour l'élément de serrage (30a).

15. Système de fixation selon l'une quelconque des revendications 12 à 14, **caractérisé en ce que** la longueur axiale (1) des lamelles expansibles (14) et de la région médiane (15; 15a) de la douille expansible (11; 11a) correspond au maximum à la distance (a) entre les deux parois (101, 102) de l'élément de support (100).

16. Système de fixation selon l'une quelconque des revendications 13 à 15, **caractérisé en ce que** la hauteur (h) de la section d'extrémité (16; 16a) correspond au maximum à l'épaisseur de paroi (d) de la paroi (102) de l'élément de support (100).
